# EUROPÄISCHE PATENTSCHRIFT

(11) **EP 4 080 297 B1**
(45) Veröffentlichungstag und Bekanntmachung des Hinweises auf die Patenterteilung: **20.11.2024**
(21) Anmeldenummer: 21170133.9
(22) Anmeldetag: 23.04.2021
(51) Int. Cl.: G05B 19/042, B64D 11/02, B64D 11/04, E03B 7/04

(54) **WASSERVERSORGUNGSSYSTEM FÜR EIN FLUGZEUG**
WATER SUPPLY SYSTEM FOR AN AIRCRAFT
SYSTÈME D'ALIMENTATION EN EAU POUR UN AVION

(43) Veröffentlichungstag der Anmeldung: 26.10.2022
(73) Patentinhaber: Airbus Operations GmbH, 21129 Hamburg (DE)
(72) Erfinder: Schreiner, Axel, 21129 Hamburg (DE); Lübbert, Tim, 21129 Hamburg (DE); Rempe, Michael, 21129 Hamburg (DE)

(56) Entgegenhaltungen:
- EP-A1- 3 385 163
- DE-A1- 10 308 498
- DE-A1- 4 202 719
- US-A1- 2005 109 763

## Beschreibung

Die vorliegende Erfindung betrifft ein Wasserversorgungssystem für ein Flugzeug, ein Flugzeug mit einem solchen Wasserversorgungssystem sowie ein Verfahren zur Steuerung eines Wasserversorgungssystems in einem Flugzeug.

Aus EP 3 385 163 A1 ist ein Flugzeug mit einem Trinkwasserversorgungssystem bekannt, bei dem mehrere Verbrauchereinheiten über ein Leitungssystem und zumindest einen Druckerzeuger mit einem Wassertank verbunden sind. Die Leitungen des Leitungssystem weisen zumindest abschnittsweise einen inneren Durchmesser von weniger als 8 mm auf, so dass zur Versorgung der Verbrauchereinheiten mit ausreichend Trinkwasser ein Druck von beispielweise 50 bar oder mehr durch den Druckerzeuger in den Leitungen aufgebaut wird. Um den Druck des Wassers vor der Ausgabe an den Verbrauchereinheiten auf einen Verbraucherwasserdruck abzusenken, sind Druckminderer vorgesehen, die zwischen dem Druckerzeuger und einer oder mehreren Verbrauchereinheiten oder Verbrauchern angeordnet sind. Die Druckminderer können auch Zwischenspeicher umfassen.

In dem aus EP 3 385 163 A1 bekannten Trinkwasserversorgungssystems können im Gegensatz zum Stand der Technik biegsame Kunststoffschläuche als Leitungen des Leitungssystems verwendet werden. Diese können nicht nur flexibler verlegt werden als die sonst übrigen starren Rohrleitungen, und erleichtern damit die Planung und Installation des Leitungssystems, sondern sind auch deutlich leichter und müssen im Gegensatz zu herkömmlichen Rohrleitungen nicht beheizt werden. Insbesondere Letzteres ist ein erheblicher Vorteil, da durch die Gewichtsreduzierungen Einsparungen im Treibstoffverbrauch des Flugzeugs und damit geringere Betriebskosten erreicht werden.

Aus DE 42 02 719 A1 ist ein Wasserversorgungssystem für ein Flugzeug bekannt mit einer Druckquelle sowie einer Mehrzahl von Verbrauchern mit Pufferspeichern. Die Mehrzahl von Verbrauchern mit Pufferspeichern ist über Leitungen und die Druckquelle mit dem Wassertank verbunden.

Die US2005/109763 A1 zeigt ein Wasserversorgungssystem für ein Flugzeug, bei dem Heißwasser zu Verbrauchern geleitet wird.

Die DE 103 08 498 A1 zeigt ein Wasserversorgungssystem eines Verkehrsflugzeuges, wobei mit einem Regelsystem von zugeordneten dezentralen Ventilen der Wasserverbrauch angepasst werden kann.

Vor diesem Hintergrund stellt sich dem Fachmann die Aufgabe, ein leichtes und kompaktes Wasserversorgungssystem für ein Flugzeug bereitzustellen. Weiterhin stellt sich dem Fachmann die Aufgabe, ein Verfahren zum Betrieb eines Wasserversorgungssystems anzugeben, dass es ermöglicht, das Wasserversorgungssystem besonders leicht und kompakt auszugestalten.

Diese Aufgabe wird gelöst durch ein Wasserversorgungssystem nach Anspruch 1, ein Flugzeug nach Anspruch 9 sowie ein Verfahren nach Anspruch 10. Bevorzugte Ausführungsformen sind in den abhängigen Ansprüchen beschrieben.

In einem ersten Aspekt betrifft die Erfindung ein Wasserversorgungssystem für ein Flugzeug mit einem Wassertank, einer Druckquelle und einer Mehrzahl von Verbrauchern mit Pufferspeichern. Die Mehrzahl von Verbrauchern mit Pufferspeichern ist über Leitungen und die Druckquelle mit dem Wassertank verbunden. Jeder Verbraucher der Mehrzahl von Verbrauchern mit Pufferspeichern weist einen Pufferspeicher für Wasser, ein Füllventil und ein Verbraucherventil auf. In jedem Verbraucher der Mehrzahl von Verbrauchern mit Pufferspeichern ist das Füllventil zwischen dem jeweiligen Pufferspeicher und der Druckquelle angeordnet und so konfiguriert, dass durch ein Öffnen des Füllventils der jeweilige Pufferspeicher befüllt werden kann. Das Verbraucherventil ist so angeordnet und konfiguriert, dass durch ein Öffnen des Verbraucherventils Wasser aus dem Pufferspeicher entnommen werden kann. Jeder Verbraucher mit einem Pufferspeicher ist dazu konfiguriert ist, zumindest einen Zustandsparameter, der einen Zustand des Pufferspeichers des jeweiligen Verbrauchers beschreibt, an ein Steuersystem des Wasserversorgungssystems zu übermitteln. Das Steuersystem ist dazu konfiguriert, ein Öffnen und Schließen der Füllventile der Verbraucher mit Pufferspeichern unter Berücksichtigung der übermittelten Zustandsparameter derart zu steuern, dass eine Wasserentnahme aus dem Wassertank durch die Druckquelle zu keinem Zeitpunkt einen Grenzwert überschreitet.

Mit anderen Worten ist ein System vorgesehen, mit dem eine Mehrzahl von Verbrauchern mit Pufferspeichern in einem Flugzeug mit Wasser und vorzugsweise mit Trinkwasser aus einem Wassertank versorgt werden können. Das System kann in einer beispielhaften Ausführungsform auch eine Mehrzahl von Verbrauchern ohne Pufferspeicher umfassen. Die Verbraucher können beispielsweise Waschräume sein, in denen sowohl ein Wasserhahn eines Waschbeckens als auch die Spülung eines WCs mit Wasser versorgt werden müssen. Ein anderer Verbraucher wäre ein Wasserhahn in einer Flugzeugküche oder Galley.

Die Verbraucher sind über eine oder mehrere Leitungen, die zusammen als Leitungssystem bezeichnet werden können, mit dem Wassertank verbunden. Die Leitungen können beispielsweise flexible Kunststoffleitungen mit einem Innendurchmesser von weniger als 8 mm sein. Wasser wird aus dem Wassertank mittels einer Druckquelle oder Pumpe entnommen, die das Wasser durch die Leitungen zu den Verbrauchern pumpt. Aufgrund des geringen Innendurchmessers der Leitungen muss die Druckquelle in diesem Fall einen Wasserdruck von 10 bar oder mehr, vorzugsweise 20 bar oder mehr und noch bevorzugter von 50 bar oder mehr erzeugen können, um die Verbraucher mit ausreichend Wasser zu versorgen. Es handelt sich somit um eine Hochdruckpumpe.

Jeder Verbraucher der Mehrzahl von Verbrauchern mit Pufferspeichern umfasst zumindest einen Pufferspeicher sowie ein Füllventil und ein Verbraucherventil. Das Füllventil ist zwischen dem Pufferspeicher und der Druckquelle angeordnet und kann geöffnet werden, um den Pufferspeicher mit Wasser aus dem Wassertank zu befüllen. Um Wasser aus dem Pufferspeicher zu entnehmen, ist das Verbraucherventil vorgesehen. Ein Verbraucherventil könnte beispielsweise in einem Waschraum zwischen einem Pufferspeicher und einem Wasserhahn oder einem WC-Becken angeordnet sein. Betätigt ein Nutzer einen Taster, um beispielsweise Wasser zum Waschen aus dem Wasserhahn oder zum Spülen des WC-Beckens anzufordern, öffnet das Verbraucherventil und entnimmt Wasser aus dem Pufferspeicher. Ein Pufferspeicher kann auch mit mehr als einem Verbraucherventil ausgestattet sein. Beispielsweise kann der Pufferspeicher sowohl eine WC-Spülung als auch einen Wasserhahn in einem Waschraum versorgen, die in diesem Fall also beide Wasser aus dem Pufferspeicher entnehmen.

Der Pufferspeicher kann Wasser beispielsweise bei einem niedrigen Versorgungsdruck von zwischen 2 bar und 6 bar speichern oder alternativ drucklos, d.h., unter Umgebungsdruck speichern. In letzterem Fall könnte beispielsweise in dem Pufferspeicher eine Pumpe angeordnet sein, mit der Wasser aus dem Pufferspeicher entnommen wird.

Jeder der Verbraucher mit einem Pufferspeicher ist dazu konfiguriert, einen oder mehrere Zustandsparameter, der den Zustand des Pufferspeichers betrifft, an ein Steuersystem des Wasserversorgungssystems zu übermitteln. Diese Übermittlung kann drahtgebunden oder drahtlos erfolgen. Beispielsweise kann der Verbraucher in regelmäßigen Abständen, d.h., kontinuierlich, den oder die Zustandsparameter auf einen drahtgebundenen Bus, wie beispielsweise ein Ethernet-Netzwerk, ein CAN-Bus oder einen ARINC-Bus, ausgeben. Alternativ kann der Verbraucher den Zustandsparameter auch immer dann übermitteln, wenn sich der oder die Zustandsparameter ändert. Denkbar ist auch, dass das Steuersystem die Zustandsparameter abfragt und sie daraufhin von dem Verbraucher übermittelt werden. Beispiele für Zustandsparameter sind in den bevorzugten Ausführungsformen angegeben.

Das Steuersystem ist dazu konfiguriert, auf Grundlage der von den einzelnen Verbrauchern übermittelten Zustandsparameter das Öffnen und Schließen der Füllventile zu steuern. Mit anderen Worten kann das Steuersystem den Öffnungsgrad der Füllventile verändern, also beispielsweise ein Füllventil in einen geöffnete Stellung bringen, so dass der nachfolgende Pufferspeicher befüllt werden kann, oder in eine geschlossene Stellung bringen, so dass der Pufferspeicher von den Leitungen getrennt wird, die den Verbraucher mit dem Wassertank verbinden. Zur Steuerung der Füllventile ist das Steuerungssystem über eine Datenverbindung, die ebenfalls drahtlos oder drahtgebunden sein kann, mit den einzelnen Füllventilen verbunden. Die Verbindung kann beispielsweise so erfolgen, dass das Steuersystem jedes Füllventil direkt ansteuert oder dass das Steuersystem einer lokalen Kontrolleinheit des Verbrauchers Steuerbefehle erteilt, die wiederum die eigentliche Steuerung der Füllventile übernimmt. Auch andere Ausgestaltungen sind möglich, hier aber nicht näher beschrieben.

Die Steuerung der Füllventile erfolgt mit dem Ziel, die gesamte Wassermenge, die zu jedem Zeitpunkt durch die Druckquelle bereitgestellt werden muss, unter einem vorbestimmten Schwellwert zu halten. Dieser Schwellwert kann beispielsweise so gewählt sein, dass zu jedem Zeitpunkt nur der Pufferspeicher eines Verbrauchers der Mehrzahl von Verbrauchern mit Wasser befüllt werden kann. Es ist aber auch denkbar, dass zwei Pufferspeicher gleichzeitig mit Wasser befüllt werden können. In jedem Fall ist der Schwellwert aber so gewählt, dass nur ein Bruchteil der Pufferspeicher, die über die gleiche Druckquelle mit dem Pufferspeicher verbunden sind, zeitgleich befüllt werden können. Beispielsweise kann nur einer von vier Pufferspeichern oder einer von acht Pufferspeicher zeitgleich gefüllt werden.

Die eigentliche Logik des Steuersystems, die zumindest unter Berücksichtigung der übermittelten Zustandsparameter über eine Öffnung der Füllventile der Verbraucher mit Pufferspeichern entscheidet, kann beispielsweise eine fest vorgegebene Logik sein, die nach vordefinierten Regeln entscheidet, wann welches Füllventil öffnet. Es ist aber auch denkbar, eine selbstlernende Logik zu verwenden, die auf Grundlage von aufgezeichneten Daten ständig neu entscheidet, welches Füllventil wann zu öffnen ist, um einen möglichst geringe zeitgleiche Wasserentnahme aus dem Wassertank durch die Druckquelle zu ermöglichen.

Durch die Beschränkung der Wassermenge, die zeitgleich durch die Druckquelle aus dem Wasserspeicher entnommen wird, also die Beschränkung der Wasserannahme, können die Abmessungen, das Gewicht und die Leistungsaufnahme der Druckquelle oder Pumpe minimiert werden. Eine kompakte und leichte Druckquelle ist im Flugzeugbereich grundsätzlich von Vorteil, da durch das eingesparte Gewicht die Betriebskosten des Flugzeugs gesenkt werden können. Müsste die Pumpe so ausgestaltet sein, dass sie sämtliche Verbraucher in einem Flugzeug zeitgleich mit Wasser versorgen kann, müsste sie aufgrund des hohen notwendigen Wasserdrucks in den Leitungen sehr groß und schwer dimensioniert werden. Eine entsprechend leistungsärmere Pumpe erzeugt zudem deutlich weniger Lärm und Vibrationen, was insbesondere in einem Passagierflugzeug von einem großen Vorteil ist.

In einer bevorzugten Ausführungsform ist das Steuersystem dazu konfiguriert, das Öffnen und Schließen der Füllventile von Verbrauchen mit Pufferspeichern, die über die Druckquelle mit dem Wassertank verbunden sind, so zu steuern, dass zu keinem Zeitpunkt mehr als ein vorbestimmte Anzahl von Füllventilen, die kleiner ist als die Anzahl der Mehrzahl von Verbrauchern, geöffnet ist. Weiter bevorzugt ist das Steuersystem dazu konfiguriert, dass zu keinem Zeitpunkt mehr als ein einziges Füllventil geöffnet ist. Lediglich eine feste Anzahl von Füllventilen maximal zu öffnen und vorzugsweise stets nur ein Füllventil zeitgleich zu öffnen, stellt eine besondere zuverlässige Vorgehensweise dar, um die maximale Wasserentnahme aus dem Wassertank durch die Druckquelle zu beschränken.

In einer bevorzugten Ausführungsform wird der zumindest eine Zustandsparameter ausgewählt aus einem Füllstand des Pufferspeichers, einem Druck des Wassers in dem Pufferspeicher und einer Anforderung einer Öffnung des Verbraucherventils. Weiter bevorzugt ist es, wenn alle drei Zustandsparameter an das Steuersystem übermittelt werden. Zur Erfassung des Füllstands des Pufferspeichers und des Wasserdrucks im Pufferspeicher können beispielsweise Sensoren im Pufferspeicher verbaut werde, die die entsprechenden Parameter erfassen und - direkt oder indirekt - an das Steuersystem übermitteln. Eine Anforderung einer Öffnung des Verbraucherventils entspricht beispielsweise einer Betätigung eines Tasters in einem Waschraum des Flugzeugs, mit dem die Spülung des WCs ausgelöst oder Wasser zum Waschen angefordert wird. Anhand aller drei Parameter kann das Steuersystem erkennen, wie notwendig eine Befüllung des jeweiligen Pufferspeichers mit Wasser ist und so entscheiden, welcher Pufferspeicher zu welchem Zeitpunkt gefüllt wird.

Beispielsweise kann das Steuersystem erkennen, dass der Füllstand eines Pufferspeichers in einem Waschraum nur noch für eine weitere Betätigung eines Wasserhahns ausreicht, aber nicht mehr für eine Betätigung der Spülung des WCs, während in einem anderen Waschraum des Flugzeugs im Pufferspeicher noch Wasser für eine Betätigung der Spülung des WCs und mehrere Betätigungen des Wasserhahns zur Verfügung stehen. In diesem Fall kann das Steuersystem zunächst den Pufferspeicher des ersten Waschraums auffüllen, indem das entsprechende Füllventil geöffnet wird, und im Anschluss das Füllventil des zweiten Waschraums öffnen. Unter der Betätigung einer Spülung oder eines Wasserhahns wird dabei die Anforderung einer Öffnung des mit der Spülung bzw. dem Wasserhahn verbundenen Verbraucherventils verstanden und ein Waschraum könnte beispielsweise jeweils einen Verbraucher darstellen.

Alternativ oder ergänzend ist es bevorzugt, dass der Zustandsparameter eine Zustandsbeschreibung des Pufferspeichers ist. Beispielsweise könnte die Zustandsbeschreibung in einer Angabe bestehen, wie oft ein Verbraucherventil noch betätigt werden kann, bis der Pufferspeicher des jeweiligen Verbrauchers leer ist. So könnte der Zustandsparameter eines Pufferspeichers, der mit einem Wasserhahn in einer Flugzeugküche verbunden ist, beispielsweise melden, dass der Inhalt des Pufferspeichers noch für drei Öffnungen des Verbraucherventils ausreicht. Das Steuersystem kann auf Grundlage dieses Zustandsparameters entscheiden, in welcher Reihenfolge die Füllventile geöffnet werden, so dass der Grenzwert für die Wasserentnahme nicht überschritten und dennoch eine gleichmäßige und rechtzeitige Versorgung der Verbraucher mit Wasser ermöglicht wird. Die Zustandsbeschreibung kann beispielsweise durch Messung von Füllstand und Druck im Pufferspeicher bestimmt werden. Es ist aber auch denkbar, dass die Zustandsbeschreibung bestimmt wird, indem der Verbraucher mitzählt, wie oft das Verbraucherventil geöffnet wurde, seitdem der Pufferspeicher zuletzt befüllt wurde.

Daneben kann das Steuersystem vorzugsweise auch weitere Parameter oder Kriterien bei der Entscheidung berücksichtigen, welches Füllventil wann geöffnet wird. Beispielsweise ist es möglich, verschiedenen Verbrauchern unterschiedliche Prioritäten zuzuordnen. So könnten einer Galley eine höhere Priorität zugeordnet werden als einem Waschraum in der Business-Class, der wiederum eine höhere Priorität hat als ein Waschraum in der Economy.

Weiterhin könnte das Steuersystem die Frequenz berücksichtigen, mit der die Öffnung des oder der Verbraucherventile eines Verbrauchers angefordert wird. Eine höhere Frequenz könnte darauf hindeuten, dass der Verbraucher auch zukünftig häufiger verwendet wird und daher schneller aufgefüllt werden sollte.

In einer bevorzugten Ausführungsform wird das Steuersystem von einer zentralen Steuereinheit gebildet, die dazu konfiguriert ist, das Öffnen und Schließen der Füllventile der Verbraucher mit Pufferspeichern zu steuern. Eine solche zentrale Steuereinheit, die beispielsweise in die übrige Kabinensteuerung einer Flugzeugkabine integriert sein könnte, würde zentral über die Öffnung und das Schließen jedes Füllventils entscheiden.

Alternativ oder ergänzend umfasst das Steuersystem eine Mehrzahl von eigenständigen Steuereinheiten, wobei jede eigenständige Steuereinheit einem Verbraucher mit eiern Pufferspeicher zugeordnet ist, wobei jeder eigenständigen Steuereinheit die von den Verbrauchern an das Steuersystem übermittelten Zustandsparameter zur Verfügung stehen, unter deren Berücksichtigung das Steuersystem die Wasserentnahme aus dem Wassertank durch die Druckquelle steuert, und wobei jede eigenständige Steuereinheit dazu konfiguriert ist, das Füllventil des Verbrauchers zu steuern, dem sie zugeordnet ist.

Mit anderen Worten ist in der bevorzugten Ausführungsform vorgesehen, dass das Steuersystem eine Mehrzahl von unabhängigen Steuereinheiten umfasst, von denen jede einem Verbraucher mit einem Pufferspeicher zugeordnet ist. Jeder der eigenständigen oder unabhängigen Steuereinheiten stehen die gleichen Zustandsparameter über alle Verbraucher zur Verfügung, auf deren Grundlage eine Entscheidung darüber getroffen wird, welches Füllventil wann geöffnet und geschlossen wird. Zudem ist in alle Steuereinheiten dieselbe Logik implementiert, auf Grundlage derer die Entscheidung zum Öffnen und Schließen der Füllventile getroffen wird. Damit kann jede Steuereinheit zu jedem Zeitpunkt bestimmen, welches Füllventil aktuell zu öffnen oder zu schließen ist, ohne dass hierfür eine zentrale Steuereinheit notwendig ist. Dies hat insbesondere den Vorteil, dass auch beim Ausfall einzelner Steuereinheiten die übrigen Steuereinheiten funktional bleiben. Mit anderen Worten ist beim Ausfall einer Steuereinheit auch stets nur der Verbraucher von dem Ausfall betroffen, dem die ausgefallene Steuereinheit zugeordnet ist. Alle anderen Verbraucher können weiter betrieben werden, da sie unabhängig gesteuert werden.

In einer bevorzugten Ausführungsform ist das Steuersystem dazu eingerichtet, ein Öffnen und Schließen des Verbraucherventils zumindest eines Verbrauchers der Mehrzahl von Verbrauchern zu steuern. Mit anderen Worten kann das Steuersystem in der bevorzugten Ausführungsform nicht nur das Füllventil eines Verbrauchers steuern, sondern auch das Verbraucherventil des Verbrauchers.

Vorzugsweise wird die Steuerung des Verbrauchventils dazu verwendet bei zumindest einem Verbraucher der Mehrzahl von Verbrauchern mit Pufferspeichern, dessen Verbraucherventil von dem Steuersystem gesteuert werden kann und der dazu konfiguriert ist, als einen Zustandsparameter eine Anforderung einer Öffnung des Verbraucherventils an das Steuersystem zu übermitteln, einen Zeitpunkt einer Öffnung des Verbraucherventils auf eine Anforderung zur Öffnung des Verbraucherventils durch einen Benutzer hin zu verzögern, so dass das Befüllen des Pufferspeichers verzögert werden kann. Das Steuersystem greift somit nicht nur in die Befüllung des Pufferspeichers ein, indem das Öffnen und Schließen des Füllventils gesteuert wird, sondern kontrolliert auch die Öffnung des Verbraucherventils, wenn ein Benutzer die Öffnung desselben anfordert. So kann beispielsweise bei einem geringen Füllstand eines Pufferspeichers eines Waschraums die Öffnung des Verbraucherventils der WC-Spülung verzögert werden, damit noch ausreichend Wasser zum Waschen der Hände zur Verfügung steht.

Neben den bereits beschriebenen Verbrauchern mit Pufferspeichern kann ein beispielhaftes Wasserversorgungssystem auch Verbraucher umfassen, die keinen Pufferspeicher umfassen. Derartige Verbraucher umfassen lediglich ein Verbraucherventil und einen Druckminderer, der zwischen den Verbraucherventil und der Druckquelle angeordnet ist. Es ist beispielsweise denkbar, dass derartige Verbraucher ohne Pufferspeicher eine Anforderung zum Öffnen des Verbraucherventils an das Steuersystem übermitteln und das Steuersystem ein Öffnen des Verbraucherventils so steuert, dass eine Wasserentnahme aus dem Wassertank durch die Druckquelle zu keinem Zeitpunkt einen Grenzwert überschreitet. Hierzu kann beispielsweise die Öffnung des Verbraucherventils verzögert werden, bis eine bei Anforderung laufende Füllung eines Pufferspeichers eines anderen Verbrauchers abgeschlossen ist.

Die Steuerung der Verbraucherventile kann aber auch verwendet werden, um beispielsweise im Landeanflug oder während des Fluges automatisch Wasser aus dem Flugzeug abzulassen und so das Landegewicht des Flugzeugs zu verringern.

Es ist weiter bevorzugt, wenn das Steuersystem dazu eingerichtet ist, Flugdaten von einem Flugzeugsystem zu erhalten und die erhaltenen Flugdaten beim Steuern der Füllventile und/oder der Verbraucherventile der Verbraucher zu berücksichtigen. Die Flugdaten können beispielsweise die Auslastung des Flugzeuges, auch aufgeteilt nach Buchungsklassen, den Status eines Waschraums (Besetzt oder Unbesetzt), die Flugphase wie beispielsweise Start, Landung, Reiseflug oder Rollen, die Bordzeit, die geplante Versorgung der Passagiere oder Informationen zum Kabinenlayout umfassen, die alle bei der Steuerung der Füllventile berücksichtigt werden können, um ein möglichst optimales Befüllen der Pufferspeicher zu ermöglichen.

In einer beispielhaften bevorzugten Ausführungsform ist vorgesehen, dass das jeder Verbraucher sein eigenes Füllventil auch unabhängig von dem Steuersystem öffnen und schließen kann, um auch bei einem Ausfall des Steuersystems eine Funktion der Verbraucher zu gewährleisten.

In einem zweiten Aspekt betrifft die Erfindung ein Flugzeug mit einem Wasserversorgungssystem nach einer der zuvor beschriebenen Ausführungsformen. Die Vorteile des Flugzeugs entsprechen den Vorteilen des darin verwendeten Wasserversorgungssystems.

In einem dritten Aspekt betrifft die Erfindung ein Verfahren zur Steuerung eines Wasserversorgungssystems für ein Flugzeug mit einem Wassertank, einer Druckquelle und einer Mehrzahl von Verbrauchern mit Pufferspeichern, wobei die Mehrzahl von Verbrauchern mit Pufferspeichern über Leitungen und die Druckquelle mit dem Wassertank verbunden ist, wobei jeder Verbraucher einen Pufferspeicher für Wasser, ein Füllventil und ein Verbraucherventil aufweist, wobei in jedem Verbraucher der Mehrzahl von Verbrauchern mit Pufferspeichern das Füllventil zwischen dem jeweiligen Pufferspeicher und der Druckquelle angeordnet und so konfiguriert ist, dass durch ein Öffnen des Füllventils der jeweilige Pufferspeicher befüllt werden kann, und das Verbraucherventil so angeordnet und konfiguriert ist, dass durch ein Öffnen des Verbraucherventils Wasser aus dem Pufferspeicher entnommen werden kann, wobei jeder Verbraucher mit einem Pufferspeicher zumindest einen Zustandsparameter, der einen Zustand des Pufferspeichers des jeweiligen Verbrauchers beschreibt, an ein Steuersystem des Wasserversorgungssystems übermittelt, und wobei das Steuersystem ein Öffnen und Schließen der Füllventile der Verbraucher unter Berücksichtigung der übermittelten Zustandsparameter derart steuert, dass eine Wasserentnahme aus dem Wassertank durch die Druckquelle zu keinem Zeitpunkt einen Grenzwert überschreitet.

Das Öffnen und Schließen der Füllventile von Verbrauchen mit Pufferspeichern, die über die Druckquelle mit dem Wassertank verbunden sind, wird vorzugsweise so gesteuert, dass zu keinem Zeitpunkt mehr als eine vorbestimmte Anzahl von Füllventilen geöffnet ist, wobei die vorbestimmte Anzahl kleiner als die Anzahl der Mehrzahl von Verbrauchern mit Pufferspeichern und vorzugsweise eins ist.

Vorzugsweise ist der zumindest eine Zustandsparameter ausgewählt aus einem Füllstand des Pufferspeichers, einem Druck des Wassers in dem Pufferspeicher und einer Anforderung einer Öffnung des Verbraucherventils. Weiter bevorzugt übermittelt jeder Verbraucher alle drei Zustandsparameter an das Steuersystem. Alternativ oder ergänzend ist der zumindest eine Zustandsparameter eine Zustandsbeschreibung des Pufferspeichers.

Das Steuersystem wird vorzugsweise von einer zentralen Steuereinheit gebildet, die das Öffnen und Schließen der Füllventile der Verbraucher mit Pufferspeichern steuert. Alternativ umfasst das Steuersystem eine Mehrzahl von eigenständigen Steuereinheiten, wobei jede eigenständige Steuereinheit einem Verbraucher mit einem Pufferspeicher zugeordnet ist, wobei jeder eigenständigen Steuereinheit die von den Verbrauchern an das Steuersystem übermittelten Zustandsparameter zur Verfügung stehen, unter deren Berücksichtigung das Steuersystem die Wasserentnahme aus dem Wassertank durch die Druckquelle steuert, und wobei jede eigenständige Steuereinheit das Füllventil des Verbrauchers steuert, dem sie zugeordnet ist.

Vorzugsweise wird ein Öffnen und Schließen des Verbraucherventils zumindest eines Verbrauchers der Mehrzahl von Verbrauchern mit Pufferspeichern durch das Steuersystem gesteuert. Zumindest ein Verbraucher der Mehrzahl von Verbrauchern mit Pufferspeichern, dessen Verbraucherventil von dem Steuersystem gesteuert werden kann, übermittelt als einen Zustandsparameter eine Anforderung einer Öffnung des Verbraucherventils an das Steuersystem, und das Steuersystem verzögert einen Zeitpunkt einer Öffnung des Verbraucherventils auf eine Anforderung zur Öffnung des Verbraucherventils durch einen Benutzer hin verzögert, so dass das Befüllen des Pufferspeichers verzögert werden kann.

Die Vorteile des Verfahrens entsprechen den Vorteilen des jeweiligen Wasserversorgungssystems, das Vorrichtungsmerkmale aufweist, die den jeweiligen Verfahrensmerkmalen entsprechen. Die oben beschriebenen beispielhaften Ausgestaltungen des Wasserversorgungssystems sind auch auf das Verfahren übertragbar.

Nachfolgend werden bezugnehmend auf die Zeichnungen Ausführungsbeispiele eines Wasserversorgungssystems sowie ein Ausführungsbeispiel eines Flugzeugs mit einem Wasserversorgungssystem und Ausführungsbeispiele eines Verfahrens beschrieben, dabei zeigt
- Figur 1: ein erstes Ausführungsbeispiel eines Wasserversorgungssystems,
- Figur 2: ein zweites Ausführungsbeispiel eines Wasserversorgungssystems und
- Figur 3: ein Ausführungsbeispiel eines Flugzeugs.

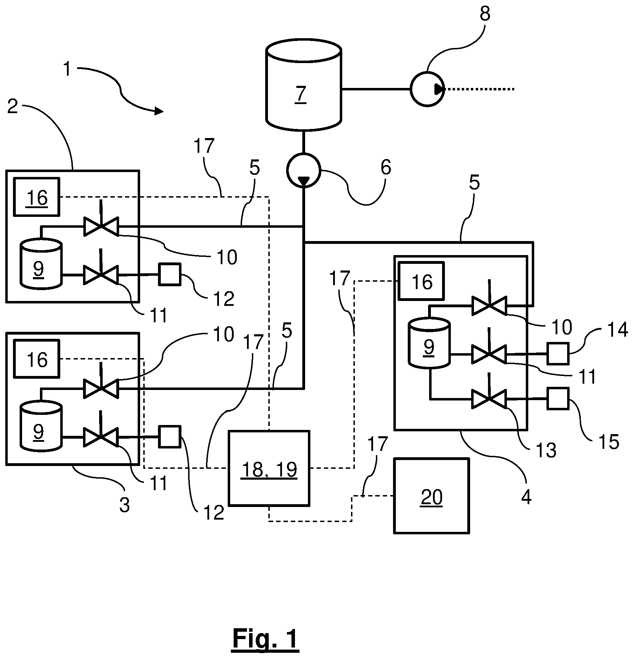

Nachfolgend werden zunächst ein erstes Beispiel eines Wasserversorgungssystems 1 für ein Flugzeug und ein Verfahren zum Betrieb eines solchen Wasserversorgungssystems bezugnehmend auf Figur 1 beschrieben. Das Wasserversorgungssystem 1 umfasst eine Mehrzahl von Verbrauchern 2, 3, 4 mit Pufferspeichern 9, die über Leitungen 5 und eine Druckquelle 6 in Form einer Hochdruckpumpe mit einem Frischwassertank 7, der auch kurz als Wassertank bezeichnet wird, verbunden sind. Bei den Verbrauchern 2 und 3 handelt es sich um Wasserhähne in einer Galley oder Flugzeugküche. Der Verbraucher 4 ist ein Waschraum des Flugzeugs.

Über die Druckquelle 6 können weitere Verbraucher mit dem Wassertank 7 verbunden werden, die jedoch in Figur 1 nicht dargestellt sind. Insbesondere auch solche Verbraucher, die keinen Pufferspeicher umfassen. Zudem sind über eine weitere Druckquelle 8 zusätzliche Verbraucher mit dem Wassertank verbunden, die jedoch in Figur 1 ebenfalls nicht dargestellt sind.

Die Leitungen 5 sind flexible Kunststoffleitungen mit einem Innendurchmesser von weniger als 8 mm. Um ausreichende Wassermengen aus dem Wassertank 7 zu den Verbrauchern 2, 3, 4 in ausreichend kurzer Zeit zu transportieren, beaufschlagt die Druckquelle das aus dem Wassertank 7 entnommen Wasser mit einem Druck von mehr als 10 bar. Daher umfasst jeder der Verbraucher 2, 3, 4 einen eigenen Pufferspeicher 9, in dem Wasser bei einem niedrigeren Verbraucherdruck von 2 bis 6 bar zwischengespeichert wird. Daneben umfasst jeder Verbraucher 2, 3, 4 ein Füllventil 10, mit dem das Befüllen der Pufferspeicher oder Zwischenspeicher 9 gesteuert werden kann.

Daneben umfasst jeder Verbraucher 2, 3, 4 zumindest ein Verbraucherventil 11, über das Wasser aus dem jeweiligen Pufferspeicher 9 entnommen werden kann. Die ersten beiden Verbraucher 2, 3 umfassen jeweils nur ein Verbraucherventil 11, dass jeweils mit einem Wasserhahn 12 verbunden ist. Auf eine Anforderung durch einen Benutzer hin öffnet das Verbraucherventil 11 der Verbraucher 2, 3 und es wird eine definierte Menge Wasser aus dem Pufferspeicher 9 entnommen. Der dritte Verbraucher 4 umfasst zwei Verbraucherventile 11, 13, über die jeweils Wasser aus dem Pufferspeicher 9 entnommen werden kann. Das erste Verbraucherventil 11 ist dazu vorgesehen, einen Spülung 14 eines WCs mit Wasser zu versorgen, während über das zweite Verbraucherventil 13 dazu vorgesehen ist, einen Wasserhahn 15 in einem Waschbecken mit Wasser zu versorgen.

Jede Verbraucher 2, 3, 4 verfügt zudem über eine Datenverberarbeitungseinheit 16, die über die Datenleitungen 17 mit einem Steuersystem 18 verbunden sind, das in dem in Figur 1 dargestellten Ausführungsbeispiels von einer zentralen Steuereinheit 19 gebildet wird. Die Datenverarbeitungseinheiten 16 sind mit Sensoren (nicht dargestellt) an den Pufferspeichern 9 verbunden, die einen Druck in dem Pufferspeicher 9 sowie die Füllhöhe bzw. den Füllstand des Pufferspeichers 9 erfassen und die gemessenen Werte an den Datenverarbeitungseinheit 16 übermitteln. Des Weiteren ist jede Datenverarbeitungseinheit 16 jeweils mit dem Füllventil 10 und dem oder den Verbraucherventilen 11, 13 des zugehörigen Verbrauchers verbunden und kann das Öffnen und Schließen der Ventile 10, 11, 13 steuern. Die Verbindungen der Datenverarbeitungseinheit innerhalb der Verbraucher 2, 3, 4, die drahtlos oder drahtgebunden sein können, sind nicht dargestellt, um die Zeichnung nicht zu überfrachten.

Ebenfalls nicht gesondert dargestellt sind Taster, mit denen ein Benutzer die Ausgabe von Wasser an den Wasserhähnen 12, 15 bzw. durch die Spülung 14 anfordern kann. Jeder Taster ist mit der Datenverarbeitungseinheit 16 des jeweiligen Verbrauchers 2, 3, 4 verbunden. Wird ein Taster betätigt, übermittelt der Taster eine entsprechende Anforderung zur Abgabe von Wasser an die lokale Datenverarbeitungseinheit 16, die daraufhin das entsprechende Verbraucherventil 11, 13 öffnen kann.

Jede der Datenverarbeitungseinheiten 16 übermittelt Zustandsparameter, die den Zustand des Pufferspeichers 9 kennzeichnen, an das Steuersystem 18. Die Zustandsparameter umfassen den Füllstand des Pufferspeichers 9, den Druck im Pufferspeicher sowie Anforderungen zur Öffnung von Verbraucherventilen. Auf Grundlage dieser Zustandsparametern ermittelt oder berechnet das Steuersystem 18, welches Füllventil 10 zu welchem Zeitpunkt geöffnet wird, um den jeweiligen Pufferspeicher 9 wieder zu befüllen. Das Steuersystem 18 öffnet dabei beispielsweise stets nur ein Füllventil gleichzeitig, so dass die Wasserentnahme aus dem Wassertank 7 durch die Hochdruckpumpe 6 auf die Menge begrenzt wird, die maximal durch eines der Füllventile 10 entnommen werden kann.

Auf diese Weise wird sichergestellt, dass die Hochdruckpumpe oder Druckquelle 6 maximal eine vordefinierte und deutlich beschränkte Leistung erbringen muss. Dadurch kann die Pumpe 6 klein und kompakt geformt werden im Vergleich zu einer Pumpe, die in der Lage sein muss, die Pufferspeicher 9 aller Verbraucher 2, 3, 4 gleichzeitig zu befüllen. Eine entsprechend kleiner dimensionierte Pumpe 6 nimmt auch weniger Leistung auf und erzeugt weniger Lärm.

Neben den von den Zustandsparametern, die das Steuersystem 18 von den Datenverarbeitungseinheiten 16 der Verbraucher 2, 3, 4 übermittelt bekommt bzw. erhält, berücksichtigt das Steuersystem 18 auf eine Priorisierung der Verbraucher 2, 3, 4. So haben in dem in Figur 1 dargestellten Beispiel die Verbraucher 2 und 3, bei denen es sich um Wasserhähne in Bordküchen handelt, eine höhere Priorität als der Waschraum 4. Des Weiteren erhält das Steuersystem 18 von einem Bordcomputer 20 des Flugzeugs über eine Datenleitung 17 Informationen über die Auslastung des Flugzeugs insgesamt und in den einzelnen Klassen im Einzelnen. Auch die Datenleitung 17 kann drahtlos oder drahtgebunden sein. So kann das Steuersystem 18 beispielsweise berücksichtigen, dass die Verbraucher 2, 3, 4 in Abhängigkeit von der Auslastung des Flugzeugs und der einzelnen Klassen unterschiedlich häufig nachgefragt werden. Auch Informationen über die Flugphase werden aus dem Bordcomputer 20 an das Steuersystem 1 übermittelt und können bei der Optimierung des Befüllens der einzelnen Pufferspeicher 9 berücksichtigt werden.

Daneben kann das Steuersystem 18 auch jede Datenverarbeitungseinheit 16 in einem der Verbraucher 2, 3, 4 anweisen, bei einer Anfrage zur Öffnung eines Verbraucherventils 13, 15 diese zu verzögern. Beispielsweise kann bei einer geringen Füllhöhe des Pufferspeichers 9 in dem Verbraucher 4, der ein Waschraum ist, die Öffnung der der Spülung 14 zugeordneten Verbraucherventils 11 verzögert werden, um sicherzustellen, dass ausreichend Wasser für den Wasserhahn 15 bereitsteht.

Insoweit kann das Steuersystem 18 somit auch dazu verwendet werden, um Öffnen und Schließen der Verbraucherventile 11, 13 zu steuern. Neben der bereits beschriebenen Verzögerung der Öffnung der Verbraucherventile 11, 13, um Wasser für andere Verwendungen im Pufferspeicher 9 bereitzuhalten, kann die Öffnung der Verbraucherventile auch dazu dienen, um das Wasserversorgungssystem zu entleeren. Beispielsweise können Verbraucherventile 11, 13, die mit Wasserhähnen 12, 15 verbunden sind, deren Abflüsse nach außenbords geführt werden, hierzu verwendet werden. So kann beispielsweise überschüssiges Wasser im Flug abgelassen werden, um das Gewicht des Flugzeugs zu reduzieren.

Schließlich können die Datenverarbeitungseinheiten 16 der Verbraucher 2, 3, 4 alle Ventile 10, 11, 13 auch unabhängig von dem Steuersystem 18 öffnen. Hierdurch wird sichergestellt, dass auch bei einem Ausfall des Steuersystems 18 die Verbraucher 2, 3, 4 verwendet werden können.

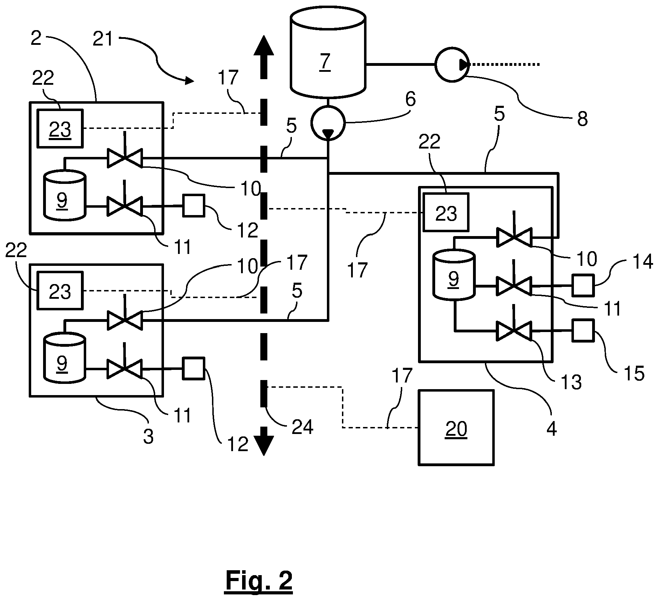

Nachfolgend werden bezugnehmend auf Figur 2 ein zweites Ausführungsbeispiel eines Wasserversorgungssystem 21 sowie eines zweiten Ausführungsbeispiels eines Verfahrens zur Steuerung eines solchen Wasserversorgungssystem 21 beschrieben. In Figur 2 sind solche Elemente des Wasserversorgungssystem 21 mit den gleichen Bezugszeichen bezeichnet wie Elemente des Wasserversorgungssystems 1 aus Figur 1, die gleich bezeichnet werden.

Um auf unnötige Wiederholungen zu verzichten, sind nur die Aspekte des Wasserversorgungssystems 21 näher beschrieben, die sich von dem Wasserversorgungssystem 1 unterscheiden. In allen übrigen Aspekten entspricht das Wasserversorgungssystem 21 aus Figur 2 dem Wasserversorgungssystem 1 aus Figur 1.

Das Wasserversorgungssystem 21 aus Figur 2 unterscheidet sich von dem Wasserversorgungssystem 1 aus Figur 1 insbesondere darin, dass das Steuersystem 22 nicht durch eine zentrale Datenverarbeitungseinheit gebildet wird, sondern von den lokalen Datenverarbeitungseinheiten 23 der einzelnen Verbraucher 2, 3, 4, die insofern dezentrale Steuereinheiten 23 darstellen. Diese dezentralen Steuereinheiten 23 übernehmen zum einen die Aufgaben der Datenverarbeitungseinheiten 16 auf Figur 1, zum anderen aber auch die Funktion der zentralen Steuereinheit 18 aus Figur 1.

Hierzu gibt jede der dezentralen Steuereinheiten 23 die Zustandsparameter des Pufferspeichers 9 des jeweiligen Verbrauchs 9 auf einen Datenbus 24 ab, auf den auch der Flugcomputer 20 Informationen bereitstellt. Der Datenbus 24 kann drahtlos oder drahtgebunden sein. Jede der dezentralen Steuereinheiten 23 liest die Zustandsparameter, die die anderen dezentralen Steuereinheiten 23 auf den Bus bereitgestellt haben. Damit verfügen alle dezentralen Steuereinheiten 23 über die gleichen Informationen, auf deren Grundlage das Steuersystem 22 darüber entscheidet, wann welches Füllventil 10 und welches Verbraucherventil 11, 13 geöffnet und wieder geschlossen wird. Da alle dezentralen Steuereinheiten die gleiche Logik verwenden, weiß jede dezentrale Steuereinheit 23 zu jedem Zeitpunkt welches Ventil 10, 11, 13 zu öffnen ist und kann damit die Öffnung der eigenen Ventile 10, 11, 13 steuern.

Diese Ausführungsform hat den Vorteil, dass bei Ausfall einer einzelnen dezentralen Steuereinheit 23 die übrigen Steuereinheiten 23 weiter funktional sind. Dies ermöglicht den optimalen Weiterbetrieb der einzelnen Verbraucher.

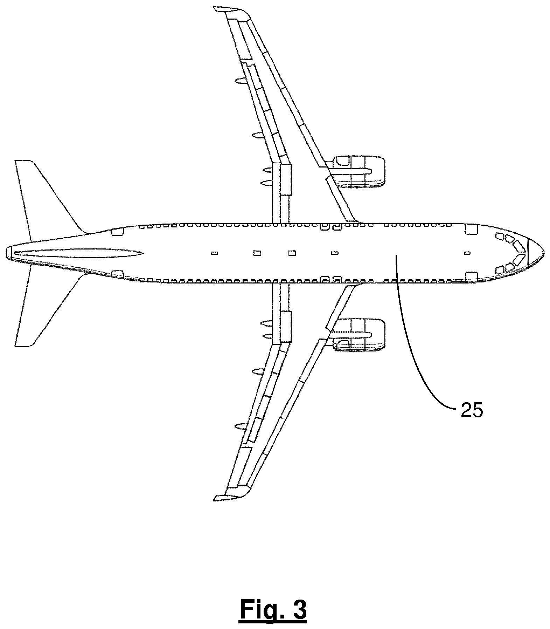

Schließlich ist in Figur 3 ein Flugzeug 25 dargestellt, in dem das Wasserversorgungssystem auf Figur 1 oder Figur 2 verwendet werden.

## Patentansprüche

1. Ein Wasserversorgungssystem (1) für ein Flugzeug (25) mit einem Wassertank (7), einer Druckquelle (6) und einer Mehrzahl von Verbrauchern (2) mit Pufferspeichern (9), wobei die Mehrzahl von Verbrauchern (2) über Leitungen (5) und die Druckquelle (6) mit dem Wassertank (7) verbunden ist,
wobei jeder Verbraucher (2) der Mehrzahl von Verbrauchern (2) mit Pufferspeichern (9) einen Pufferspeicher (9) für Wasser, ein Füllventil (10) und ein Verbraucherventil (11, 13) aufweist, wobei in jedem Verbraucher (2) der Mehrzahl von Verbrauchern (2) mit Pufferspeichern (9) das Füllventil (10) zwischen dem jeweiligen Pufferspeicher (9) und der Druckquelle (6) angeordnet und so konfiguriert ist, dass durch ein Öffnen des Füllventils (10) der jeweilige Pufferspeicher (9) befüllt werden kann, und das Verbraucherventil (11, 13) so angeordnet und konfiguriert ist, dass durch ein Öffnen des Verbraucherventils (11, 13) Wasser aus dem Pufferspeicher (9) entnommen werden kann, **dadurch gekennzeichnet, dass**
jeder Verbraucher (2) mit einem Pufferspeicher (9) dazu konfiguriert ist, zumindest einen Zustandsparameter, der einen Zustand des Pufferspeichers (9) des jeweiligen Verbrauchers beschreibt, an ein Steuersystem (18, 22) des Wasserversorgungssystems (1) übermittelt, und
wobei das Steuersystem (18, 22) dazu konfiguriert ist, ein Öffnen und Schließen der Füllventile (10) der Verbraucher (2) mit Pufferspeichern (9) unter Berücksichtigung der übermittelten Zustandsparameter derart zu steuern, dass eine Wasserentnahme aus dem Wassertank (7) durch die Druckquelle (6) zu keinem Zeitpunkt einen Grenzwert überschreitet.

2. Wasserversorgungssystem (1) nach Anspruch 1, wobei das Steuersystem (18, 22) dazu konfiguriert ist, das Öffnen und Schließen der Füllventile (10) von Verbrauchen (2) mit Pufferspeichern (9), die über die Druckquelle (6) mit dem Wassertank (7) verbunden sind, so zu steuern, dass zu keinem Zeitpunkt mehr als eine vorbestimmte Anzahl von Füllventil (10) geöffnet ist, wobei die vorbestimmte Anzahl kleiner als die Anzahl der Mehrzahl von Verbrauchern (2) mit Pufferspeichern (9) und vorzugsweise eins ist.

3. Wasserversorgungssystem (1) nach Anspruch 1 oder 2, wobei der zumindest eine Zustandsparameter ausgewählt ist aus einem Füllstand des Pufferspeichers (9), einem Druck des Wassers in dem Pufferspeicher (9) und einer Anforderung einer Öffnung des Verbraucherventils (11, 13), oder
wobei der zumindest eine Zustandsparameter eine Zustandsbeschreibung des Pufferspeichers (9) ist.

4. Wasserversorgungssystem (1) nach einem der vorhergehenden Ansprüche, wobei das Steuersystem (18) von einer zentralen Steuereinheit (19) gebildet wird, die dazu konfiguriert ist, das Öffnen und Schließen der Füllventile (10) der Verbraucher (2) mit Pufferspeichern (9) zu steuern, und/oder
wobei das Steuersystem (22) eine Mehrzahl von eigenständigen Steuereinheiten (23) umfasst, wobei jede eigenständige Steuereinheit (23) einem Verbraucher (2) mit einem Pufferspeicher (9) zugeordnet ist, wobei jeder eigenständigen Steuereinheit (23) die von den Verbrauchern (2) mit Pufferspeichern (9) an das Steuersystem (22) übermittelten Zustandsparameter zur Verfügung stehen, unter deren Berücksichtigung das Steuersystem (22) die Wasserentnahme aus dem Wassertank (7) durch die Druckquelle (6) steuert, und wobei jede eigenständige Steuereinheit (23) dazu konfiguriert ist, das Füllventil (10) des Verbrauchers (2) zu steuern, dem sie zugeordnet ist.

5. Wasserversorgungssystem (1) nach einem der vorhergehenden Ansprüche, wobei das Steuersystem (18, 22) dazu eingerichtet ist, ein Öffnen und Schließen des Verbraucherventils (11, 13) zumindest eines Verbrauchers (2) zu steuern.

6. Wasserversorgungssystem (1) nach Anspruch 5, wobei zumindest ein Verbraucher (2), dessen Verbraucherventil (11, 13) von dem Steuersystem (18, 22) gesteuert werden kann, dazu konfiguriert ist, als einen Zustandsparameter eine Anforderung einer Öffnung des Verbraucherventils (11, 13) an das Steuersystem (18, 22) zu übermitteln, und
wobei das Steuersystem (18, 22) dazu konfiguriert ist, einen Zeitpunkt einer Öffnung des Verbraucherventils (11, 13) auf eine Anforderung zur Öffnung des Verbraucherventils (11, 13) durch einen Benutzer hin zu verzögern, so dass das Befüllen des Pufferspeichers (9) verzögert werden kann.

7. Wasserversorgungssystem (1) nach einem der vorhergehenden Ansprüche, wobei das Steuersystem (18, 22) dazu eingerichtet ist, Flugdaten von einem Flugzeugsystem (20) zu erhalten und die erhaltenen Flugdaten beim Steuern der Füllventile (10) der Verbraucher (2) zu berücksichtigen.

8. Wasserversorgungssystem (1) nach einem der vorhergehenden Ansprüche, wobei die Mehrzahl von Verbrauchern (2) zumindest eine Flugzeugtoilette (2) mit einer Spülung (14) und/oder einem Wasserhahn (15) und/oder zumindest einen Wasserhahn (12) in einer Galley (2) umfassen.

9. Flugzeug (25) mit einem Wasserversorgungssystem (1) nach einem der vorhergehenden Ansprüche.

10. Verfahren zur Steuerung eines Wasserversorgungssystems (1) für ein Flugzeug (25) mit einem Wassertank (7), einer Druckquelle (6) und einer Mehrzahl von Verbrauchern (2) mit Pufferspeichern (9), wobei die Mehrzahl von Verbrauchern (2) mit Pufferspeichern (9) über Leitungen (5) und die Druckquelle (6) mit dem Wassertank (7) verbunden ist,
wobei jeder Verbraucher (2) der Mehrzahl von Verbrauchern (2) mit Pufferspeichern (9) einen Pufferspeicher (9) für Wasser, ein Füllventil (10) und ein Verbraucherventil (11, 13) aufweist, wobei in jedem Verbraucher (2) der Mehrzahl von Verbrauchern (2) mit Pufferspeichern (9) das Füllventil (10) zwischen dem jeweiligen Pufferspeicher (9) und der Druckquelle (6) angeordnet und so konfiguriert ist, dass durch ein Öffnen des Füllventils (10) der jeweilige Pufferspeicher (9) befüllt werden kann, und das Verbraucherventil (11, 13) so angeordnet und konfiguriert ist, dass durch ein Öffnen des Verbraucherventils (11, 13) Wasser aus dem Pufferspeicher (9) entnommen werden kann, **dadurch gekennzeichnet, dass**
jeder Verbraucher (2) mit einem Pufferspeicher (9) zumindest einen Zustandsparameter, der einen Zustand des Pufferspeichers (9) des jeweiligen Verbrauchers (2) beschreibt, an ein Steuersystem (18, 22) des Wasserversorgungssystems (1) übermittelt, und
wobei das Steuersystem (18, 22) ein Öffnen und Schließen der Füllventile (10) der Verbraucher (2) unter Berücksichtigung der übermittelten Zustandsparameter derart steuert, dass eine Wasserentnahme aus dem Wassertank (7) durch die Druckquelle (6) zu keinem Zeitpunkt einen Grenzwert überschreitet.

11. Verfahren nach Anspruch 10, wobei das Öffnen und Schließen der Füllventile (10) von Verbrauchen (2), die über die Druckquelle (6) mit dem Wassertank (7) verbunden sind, so gesteuert wird, dass zu keinem Zeitpunkt mehr als eine vorbestimmte Anzahl von Füllventilen (10) geöffnet ist, wobei die vorbestimmte Anzahl kleiner als die Anzahl der Mehrzahl von Verbrauchern (2) mit Pufferspeichern (9) und vorzugsweise eins ist.

12. Verfahren nach Anspruch 10 oder 11, wobei der zumindest eine Zustandsparameter ausgewählt ist aus einem Füllstand des Pufferspeichers (9), einem Druck des Wassers in dem Pufferspeicher (9) und einer Anforderung einer Öffnung des Verbraucherventils (11, 13), oder
wobei der zumindest eine Zustandsparameter eine Zustandsbeschreibung des Pufferspeichers (9) ist.

13. Verfahren nach einem der Ansprüche 10 bis 12, wobei das Steuersystem (18) von einer zentralen Steuereinheit (19) gebildet wird, die das Öffnen und Schließen der Füllventile (10) der Verbraucher (2) mit Pufferspeichern (9) steuert, oder
wobei das Steuersystem (22) eine Mehrzahl von eigenständigen Steuereinheiten (23) umfasst, wobei jede eigenständige Steuereinheit (23) einem Verbraucher (2) mit einem Pufferspeicher (9) zugeordnet ist, wobei jeder eigenständigen Steuereinheit (23) die von den Verbrauchern (2) an das Steuersystem (22) übermittelten Zustandsparameter zur Verfügung stehen, unter deren Berücksichtigung das Steuersystem (22) die Wasserentnahme aus dem Wassertank (7) durch die Druckquelle (6) steuert, und wobei jede eigenständige Steuereinheit (23) das Füllventil (10) des Verbrauchers (2) steuert, dem sie zugeordnet ist.

14. Verfahren nach einem der Ansprüche 10 bis 13, wobei ein Öffnen und Schließen des Verbraucherventils (10) zumindest eines Verbrauchers der Mehrzahl von Verbrauchern (2) mit Pufferspeichern (9) gesteuert wird.

15. Verfahren nach Anspruch 14, wobei zumindest ein Verbraucher (2) der Mehrzahl von Verbrauchern (2) mit Pufferspeichern (9), dessen Verbraucherventil (11, 13) von dem Steuersystem gesteuert werden kann, als einen Zustandsparameter eine Anforderung einer Öffnung des Verbraucherventils (11, 13) an das Steuersystem (18, 22) übermittelt, und
wobei das Steuersystem (18, 22) einen Zeitpunkt einer Öffnung des Verbraucherventils (11, 13) auf eine Anforderung zur Öffnung des Verbraucherventils (11, 13) durch einen Benutzer hin verzögert, so dass das Befüllen des Pufferspeichers (9) verzögert werden kann.

## Claims

1. Water supply system (1) for an aircraft (25) with a water tank (7), a pressure source (6) and a plurality of consumers (2) with buffer reservoirs (9), wherein the plurality of consumers (2) are connected to the water tank (7) via lines (5) and the pressure source (6),
wherein each consumer (2) of the plurality of consumers (2) with buffer tanks (9) has a buffer tank (9) for water, a filling valve (10) and a consumer valve (11, 13), wherein in each consumer (2) of the plurality of consumers (2) with buffer tanks (9) the filling valve (10) is arranged between the respective buffer tank (9) and the pressure source (6) and is configured in such a way that the respective buffer tank (9) can be filled by opening the filling valve (10), and the consumer valve (11, 13) is arranged and configured in such a way that water can be removed from the buffer tank (9) by opening the consumer valve (11, 13), **characterised in that**
each consumer (2) with a buffer tank (9) is configured to transmit at least one status parameter, which describes a status of the buffer tank (9) of the respective consumer, to a control system (18, 22) of the water supply system (1), and
wherein the control system (18, 22) is configured to control the opening and closing of the filling valves (10) of the consumers (2) with buffer tanks (9), taking into account the transmitted status parameters, in such a way that a water withdrawal from the water tank (7) by the pressure source (6) does not exceed a limit value at any time.

2. Water supply system (1) according to claim 1, wherein the control system (18, 22) is configured to control the opening and closing of the filling valves (10) of consumers (2) with buffer tanks (9), which are connected to the water tank (7) via the pressure source (6), such that at no time more than a predetermined number of filling valves (10) is open, wherein the predetermined number is smaller than the number of the plurality of consumers (2) with buffer tanks (9) and preferably one.

3. Water supply system (1) according to claim 1 or 2,
wherein the at least one status parameter is selected from a filling level of the buffer tank (9), a pressure of the water in the buffer tank (9) and a request for opening of the consumer valve (11, 13), or
wherein the at least one status parameter is a status description of the buffer tank (9).

4. Water supply system (1) according to one of the preceding claims, wherein the control system (18) is formed by a central control unit (19) which is configured to control the opening and closing of the filling valves (10) of the consumers (2) with buffer tanks (9), and/or
wherein the control system (22) comprises a plurality of independent control units (23), wherein each independent control unit (23) is assigned to a consumer (2) with a buffer tank (9), wherein the status parameters transmitted to the control system (22) by the consumers (2) with buffer tanks (9) are available to each independent control unit (23), taking these into account, the control system (22) controls the water withdrawal from the water tank (7) by the pressure source (6), and wherein each independent control unit (23) is configured to control the filling valve (10) of the consumer (2) to which it is assigned.

5. Water supply system (1) according to one of the preceding claims, wherein the control system (18, 22) is configured to control an opening and closing of the consumer valve (11, 13) of at least one consumer (2).

6. Water supply system (1) according to claim 5, wherein at least one consumer (2), whose consumer valve (11, 13) can be controlled by the control system (18, 22), is configured to transmit a request for opening the consumer valve (11, 13) to the control system (18, 22) as a status parameter, and
wherein the control system (18, 22) is configured to delay a time of opening of the consumer valve (11, 13) in response to a request for opening of the consumer valve (11, 13) by a user, so that filling of the buffer tank (9) can be delayed.

7. Water supply system (1) according to one of the preceding claims, wherein the control system (18, 22) is set up to receive flight data from an aircraft system (20) and to take the received flight data into account when controlling the filling valves (10) of the consumers (2).

8. Water supply system (1) according to one of the preceding claims, wherein the plurality of consumers (2) comprise at least one aircraft lavatory (2) with a flush (14) and/or a water tap (15) and/or at least one water tap (12) in a galley (2).

9. Aircraft (25) comprising a water supply system (1) according to any of the preceding claims.

10. Method for controlling a water supply system (1) for an aircraft (25) with a water tank (7), a pressure source (6) and a plurality of consumers (2) with buffer tanks (9), wherein the plurality of consumers (2) with buffer tanks (9) are connected to the water tank (7) via lines (5) and the pressure source (6) is connected to the water tank (7),
wherein each consumer (2) of the plurality of consumers (2) with buffer tanks (9) has a buffer tank (9) for water, a filling valve (10) and a consumer valve (11, 13), wherein in each consumer (2) of the plurality of consumers (2) with buffer tanks (9) the filling valve (10) is arranged between the respective buffer tank (9) and the pressure source (6) and is configured in such a way that the respective buffer tank (9) can be filled by opening the filling valve (10), and the consumer valve (11, 13) is arranged and configured in such a way that water can be removed from the buffer tank (9) by opening the consumer valve (11, 13), **characterised in that**
each consumer (2) with a buffer tank (9) transmits at least one status parameter, which describes a status of the buffer tank (9) of the respective consumer (2), to a control system (18, 22) of the water supply system (1), and
wherein the control system (18, 22) controls the opening and closing of the filling valves (10) of the consumers (2), taking into account the transmitted status parameters, in such a way that water withdrawal from the water tank (7) by the pressure source (6) does not exceed a limit value at any time.

11. Method according to claim 10, wherein the opening and closing of the filling valves (10) of consumers (2) connected to the water tank (7) via the pressure source (6) is controlled such that at no time more than a predetermined number of filling valves (10) is open, wherein the predetermined number is smaller than the number of the plurality of consumers (2) with buffer tanks (9) and preferably one.

12. Method according to claim 10 or 11,
wherein the at least one state parameter is selected from a filling level of the buffer tank (9), a pressure of the water in the buffer tank (9) and a request for opening of the consumer valve (11, 13), or
wherein the at least one status parameter is a status description of the buffer tank (9).

13. Method according to one of claims 10 to 12, wherein the control system (18) is formed by a central control unit (19) which controls the opening and closing of the filling valves (10) of the consumers (2) with buffer stores (9), or
wherein the control system (22) comprises a plurality of independent control units (23), wherein each independent control unit (23) is assigned to a consumer (2) with a buffer tank (9), wherein the status parameters transmitted by the consumers (2) to the control system (22) are available to each independent control unit (23), under consideration of which the control system (22) controls the water withdrawal from the water tank (7) by the pressure source (6), and wherein each independent control unit (23) controls the filling valve (10) of the consumer (2) to which it is assigned.

14. Method according to one of claims 10 to 13, wherein an opening and closing of the consumer valve (10) of at least one consumer of the plurality of consumers (2) with buffer tanks (9) is controlled.

15. Method according to claim 14, wherein at least one consumer (2) of the plurality of consumers (2) with buffer stores (9), whose consumer valve (11, 13) can be controlled by the control system, transmits a request to open the consumer valve (11, 13) to the control system (18, 22) as a status parameter, and
wherein the control system (18, 22) delays a time of opening of the consumer valve (11, 13) in response to a request for opening of the consumer valve (11, 13) by a user, so that the filling of the buffer tank (9) can be delayed.

## Revendications

1. Un système d'alimentation en eau (1) pour un avion (25) avec un réservoir d'eau (7), une source de pression (6) et une pluralité de consommateurs (2) avec des réservoirs tampons (9), la pluralité de consommateurs (2) étant reliée au réservoir d'eau (7) par des conduites (5) et la source de pression (6),
chaque consommateur (2) de la pluralité de consommateurs (2) avec des réservoirs tampons (9) présentant un réservoir tampon (9) pour l'eau, une vanne de remplissage (10) et une vanne de consommation (11, 13), la vanne de remplissage (10) étant disposée dans chaque consommateur (2) de la pluralité de consommateurs (2) avec des réservoirs tampons (9) entre le réservoir tampon (9) respectif et la source de pression (6) et étant configurée de telle sorte, que, par une ouverture de la vanne de remplissage (10), le réservoir tampon (9) respectif peut être rempli, et la vanne de consommation (11, 13) est disposée et configurée de telle sorte que, par une ouverture de la vanne de consommation (11, 13), de l'eau peut être prélevée du réservoir tampon (9), **caractérisé en ce que**
chaque consommateur (2) avec un réservoir tampon (9) est configuré pour transmettre au moins un paramètre d'état décrivant un état du réservoir tampon (9) du consommateur respectif à un système de commande (18, 22) du système d'alimentation en eau (1), et
le système de commande (18, 22) étant configuré pour commander une ouverture et une fermeture des vannes de remplissage (10) des consommateurs (2) avec des réservoirs tampons (9) en tenant compte des paramètres d'état transmis, de telle sorte qu'un prélèvement d'eau dans le réservoir d'eau (7) par la source de pression (6) ne dépasse à aucun moment une valeur limite.

2. Système d'alimentation en eau (1) selon la revendication 1, dans lequel le système de commande (18, 22) est configuré pour commander l'ouverture et la fermeture des vannes de remplissage (10) de consommateurs (2) avec des réservoirs tampons (9) reliés au réservoir d'eau (7) via la source de pression (6), de sorte qu'à aucun moment plus d'un nombre prédéterminé de vannes de remplissage (10) ne soit ouvert, le nombre prédéterminé étant inférieur au nombre de la pluralité de consommateurs (2) avec des réservoirs tampons (9) et de préférence égal à un.

3. Système d'alimentation en eau (1) selon la revendication 1 ou 2, dans lequel ledit au moins un paramètre d'état est sélectionné parmi un niveau de remplissage du réservoir tampon (9), une pression de l'eau dans le réservoir tampon (9) et une demande d'ouverture de la vanne de consommateur (11, 13), ou
ledit au moins un paramètre d'état étant une description de l'état du réservoir tampon (9).

4. Système d'alimentation en eau (1) selon l'une des revendications précédentes, dans lequel le système de commande (18) est formé par une unité de commande centrale (19) configurée pour commander l'ouverture et la fermeture des vannes de remplissage (10) des consommateurs (2) avec des réservoirs tampons (9), et/ou
le système de commande (22) comprenant une pluralité d'unités de commande autonomes (23), chaque unité de commande autonome (23) étant associée à un consommateur (2) avec un accumulateur tampon (9), chaque unité de commande autonome (23) disposant des paramètres d'état transmis au système de commande (22) par les consommateurs (2) avec accumulateurs tampons (9), en tenant compte desquels le système de commande (22) commande le prélèvement d'eau dans le réservoir d'eau (7) par la source de pression (6), et dans lequel chaque unité de commande autonome (23) est configurée pour commander la vanne de remplissage (10) du consommateur (2) auquel elle est associée.

5. Système d'alimentation en eau (1) selon l'une quelconque des revendications précédentes, dans lequel le système de commande (18, 22) est configuré pour commander une ouverture et une fermeture de la vanne de consommation (11, 13) d'au moins un consommateur (2).

6. Système d'alimentation en eau (1) selon la revendication 5, dans lequel au moins un consommateur (2) dont la vanne de consommation (11, 13) peut être commandée par le système de commande (18, 22) est configuré pour transmettre au système de commande (18, 22), comme paramètre d'état, une demande d'ouverture de la vanne de consommation (11, 13), et
dans lequel le système de commande (18, 22) est configuré pour retarder un moment d'ouverture de la vanne de consommation (11, 13) en réponse à une demande d'ouverture de la vanne de consommation (11, 13) par un utilisateur, de sorte que le remplissage du réservoir tampon (9) peut être retardé.

7. Système d'alimentation en eau (1) selon l'une quelconque des revendications précédentes, dans lequel le système de commande (18, 22) est agencé pour obtenir des données de vol d'un système d'aéronef (20) et pour prendre en compte les données de vol obtenues lors de la commande des vannes de remplissage (10) des consommateurs (2).

8. Système d'alimentation en eau (1) selon l'une quelconque des revendications précédentes, dans lequel la pluralité d'utilisateurs (2) comprend au moins une toilette d'avion (2) avec une chasse d'eau (14) et/ou un robinet (15) et/ou au moins un robinet (12) dans un galley (2).

9. Aéronef (25) comprenant un système d'alimentation en eau (1) selon l'une quelconque des revendications précédentes.

10. Procédé de commande d'un système d'alimentation en eau (1) pour un avion (25), comprenant un réservoir d'eau (7), une source de pression (6) et une pluralité de consommateurs (2) avec des réservoirs tampons (9), la pluralité de consommateurs (2) avec des réservoirs tampons (9) étant reliés par des conduites (5) et la source de pression (6) avec le réservoir d'eau (7),
chaque consommateur (2) de la pluralité de consommateurs (2) avec des réservoirs tampons (9) présentant un réservoir tampon (9) pour l'eau, une vanne de remplissage (10) et une vanne de consommation (11, 13), la vanne de remplissage (10) étant disposée dans chaque consommateur (2) de la pluralité de consommateurs (2) avec des réservoirs tampons (9) entre le réservoir tampon (9) respectif et la source de pression (6) et étant configurée de telle sorte, que, par une ouverture de la vanne de remplissage (10), le réservoir tampon (9) respectif peut être rempli, et la vanne de consommation (11, 13) est disposée et configurée de telle sorte que, par une ouverture de la vanne de consommation (11, 13), de l'eau peut être prélevée du réservoir tampon (9), **caractérisé en ce que**
chaque consommateur (2) avec un réservoir tampon (9) transmet au moins un paramètre d'état, qui décrit un état du réservoir tampon (9) du consommateur (2) respectif, à un système de commande (18, 22) du système d'alimentation en eau (1), et
le système de commande (18, 22) commandant une ouverture et une fermeture des vannes de remplissage (10) des consommateurs (2) en tenant compte des paramètres d'état transmis de telle sorte qu'un prélèvement d'eau dans le réservoir d'eau (7) par la source de pression (6) ne dépasse à aucun moment une valeur limite.

11. Procédé selon la revendication 10, dans lequel l'ouverture et la fermeture des vannes de remplissage (10) de consommateurs (2) reliés au réservoir d'eau (7) par la source de pression (6) sont commandées de manière à ce qu'à aucun moment plus d'un nombre prédéterminé de vannes de remplissage (10) ne soit ouvert, ledit nombre prédéterminé étant inférieur au nombre de la pluralité de consommateurs (2) ayant des réservoirs tampons (9) et étant de préférence égal à un.

12. Procédé selon la revendication 10 ou 11, dans lequel ledit au moins un paramètre d'état est choisi parmi un niveau de remplissage du réservoir tampon (9), une pression de l'eau dans le réservoir tampon (9) et une demande d'ouverture de la vanne de consommateur (11, 13), ou dans lequel ledit au moins un paramètre d'état est une description de l'état du réservoir tampon (9).

13. Procédé selon l'une des revendications 10 à 12, dans lequel le système de commande (18) est formé par une unité de commande centrale (19) qui commande l'ouverture et la fermeture des vannes de remplissage (10) des consommateurs (2) avec des réservoirs tampons (9), ou
le système de commande (22) comprenant une pluralité d'unités de commande autonomes (23), chaque unité de commande autonome (23) étant associée à un consommateur (2) avec un accumulateur tampon (9), chaque unité de commande autonome (23) disposant des paramètres d'état transmis par les consommateurs (2) au système de commande (22), en tenant compte desquels le système de commande (22) commande le prélèvement d'eau dans le réservoir d'eau (7) par la source de pression (6), et dans lequel chaque unité de commande autonome (23) commande la vanne de remplissage (10) du consommateur (2) auquel elle est associée.

14. Procédé selon l'une des revendications 10 à 13, dans lequel on commande une ouverture et une fermeture de la vanne de consommation (10) d'au moins un consommateur de la pluralité de consommateurs (2) comportant des réservoirs tampons (9).

15. - Procédé selon la revendication 14, dans lequel au moins un consommateur (2) de la pluralité de consommateurs (2) avec des réservoirs tampons (9), dont la vanne de consommateur (11, 13) peut être commandée par le système de commande, transmet comme paramètre d'état une demande d'ouverture de la vanne de consommateur (11, 13) au système de commande (18, 22), et
dans lequel le système de commande (18, 22) retarde un moment d'ouverture de la vanne de consommation (11, 13) en réponse à une demande d'ouverture de la vanne de consommation (11, 13) par un utilisateur, de sorte que le remplissage du réservoir tampon (9) peut être retardé.
